# EUROPEAN PATENT APPLICATION

(11) **EP 3 979 115 A1**
(43) Date of publication of application: **06.04.2022**
(21) Application number: 21193481.5
(22) Date of filing: 27.08.2021
(51) Int. Cl.: G06F 21/57, G06F 9/4401

(54) **EARLY PLATFORM HARDENING TECHNOLOGY FOR SLIMMER AND FASTER BOOT**

(30) Priority: 30.09.2020 IN 202041042509; 01.12.2020 US 202017109081
(71) Applicant: Intel Corporation, Santa Clara, CA 95054 (US)
(72) Inventor: ZIMMER, Vincent, Issaquah, 98029 (US); BANIK, Subrata, 560103 IND Bangalore KA (IN); REGUPATHY, Rajaram, 560103 Bangalore, KA, (IN)
(74) Representative: 2SPL Patentanwälte PartG mbB

(57) **Abstract**

Systems, apparatuses and methods may provide for technology that initializes static random access memory (SRAM) of a processor in response to a reset of the processor, allocates the SRAM to one or more security enforcement operations, and triggers a multi-threaded execution of the one or more security enforcement operations before completion of a basic input output system (BIOS) phase. In one example, the multi-threaded execution is triggered independently of a dynamic RAM (DRAM) initialization.

## Description

### CROSS-REFERENCE TO RELATED APPLICATIONS

The present application claims the benefit of priority to Indian Provisional Patent Application No. 202041042509 filed on September 30, 2020.

### TECHNICAL FIELD

Embodiments generally relate to security in computing platforms. More particularly, embodiments relate to early platform hardening technology for slimmer and faster boot.

### BACKGROUND

In current systems, all security enforcement is handled during a "Post Memory Phase" after DRAM (dynamic random access memory) based memory is available for chipset consumption. Accordingly, BIOS (basic input output system, e.g., boot firmware) flows must wait for DRAM based memory to be available, which consumes more time for security enforcement.

### BRIEF DESCRIPTION OF THE DRAWINGS

The various advantages of the embodiments will become apparent to one skilled in the art by reading the following specification and appended claims, and by referencing the following drawings, in which:
FIG. 1 is a block diagram of an example of firmware on a computing system according to an embodiment;
FIG. 2 is a block diagram of an example of a boot architecture according to an embodiment;
FIG. 3 is an illustration of an example of a pre-reset boot sequence according to an embodiment;
FIG. 4 is an illustration of an example of memory access response times for a memory hierarchy according to an embodiment;
FIG. 5 is an illustration of an example of a security communication flow according to an embodiment;
FIG. 6 is an illustration of an example of a chipset programming flow according to an embodiment;
FIG. 7 is a comparative illustration of an example of a conventional security initialization and a security initialization according to an embodiment;
FIG. 8 is an illustration of an example of a security authentication offload according to an embodiment;
FIGs. 9A-9C are flowcharts of example of methods of conducting a silicon initialization according to an embodiment;
FIG. 10 is a block diagram of an example of a performance-enhanced computing system according to an embodiment;
FIG. 11 is an illustration of an example of a semiconductor package apparatus according to an embodiment;
FIG. 12 is a block diagram of an example of a processor according to an embodiment; and
FIG. 13 is a block diagram of an example of a multi-processor based computing system according to an embodiment.

### DESCRIPTION OF EMBODIMENTS

With an increasing number of consumer electronics devices connecting to the Internet and transferring trillions of data per seconds, challenges are posed for device manufacturer to design secure platform (considering hardware, firmware and software) to ensure platform security.

Embodiments enable slimmer and faster boot blocks for modern needs by early hardening the platform and therefore reducing the effort on the part of product manufacturers (e.g., original device manufacturers/ODMs and/or original equipment manufacturers/OEMs) bootloader side to ensure secure SoC (system on chip) boot and a secure platform.

On a typical platform, SPI (serial peripheral interface) flash is mapped to the top of the host processor's 4GB memory so that post CPU (central processing unit) reset, bootloader code starts execution from an address decoded by the SPI flash, just below 4GB.

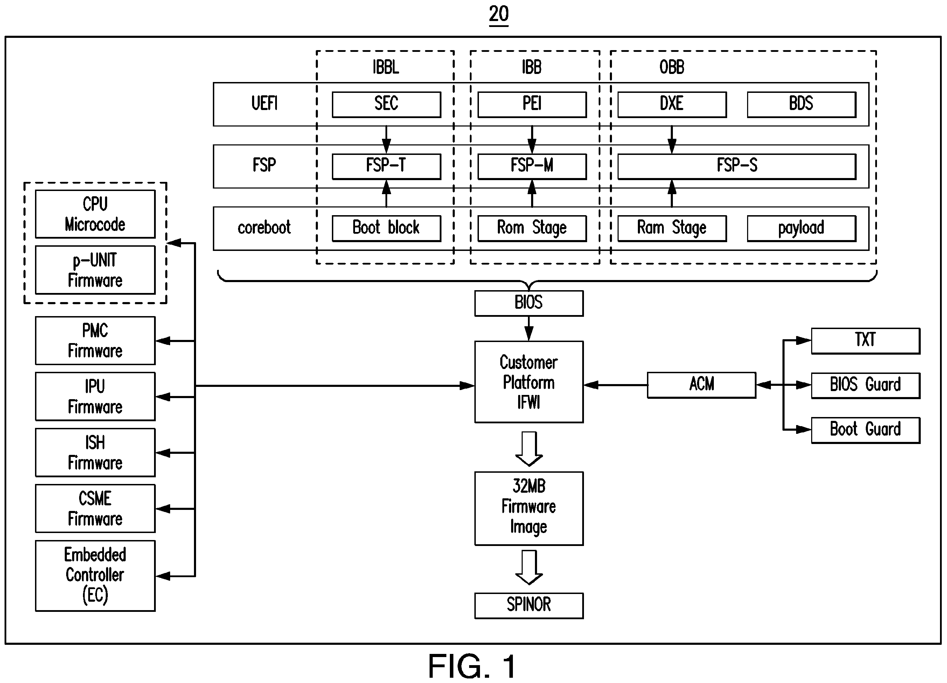

The BIOS (basic input output system) for a platform is typically divided into four execution phases as shown in a firmware layout 20 in FIG. 1:
- Pre-CPU Reset - This stage is prior to releasing the CPU from reset by associated firmware components;
- Initial Boot Block Loader (IBBL) - This stage is running from Shared Static RAM (SRAM), which is shared by the host CPU and security controller (e.g., CS(M)E/converged security and (manageability) engine or TXE/trusted execution engine), is mapped to the top of 4GB memory region;
- Initial Boot Block (IBB) - This stage is executed from temporary memory known as Cache as RAM (CAR);
- OEM Boot Block (OBB) - This stage is executed from system DRAM.

Implementation of these phases is loosely coupled into different code blocks and the integration of features are made optional according to the configuration and need of the end product. Table I below illustrates a combination of these various phases and the respective specified requirements:

**Table I**

| **Platform BIOS** | | | |
|---|---|---|---|
| | **ODM/OEM Bootloader** | | **Silicon Initialization code (FSP/firmware support package)** |
| | **UEFI (Unified Extensible Firmware Interface)** | **coreboot** | |
| **IBBL (Mandatory)** | SEC (Security Phase) | Boot Block | FSP-T (FSP-temporary) |
| **IBB (Mandatory)** | PEI (Pre-EFI Execution Environment) | Rom Stage | FSP-M (FSP-memory) |
| **OBB (optional)** | DXE+BDS | Ramstage + payload | FSP-S (FSP-silicon) |

In an embodiment, an FSP includes executable silicon initialization instructions. Moreover, in the existing ecosystem due to memory restrictions or unavailability of pre-initialized memory like SRAM at boot time, basic foundation blocks for security enforcement may have to wait until DRAM (e.g., until the end of IBB/FSP-M, meaning ∼400ms since reset) is available. This in-turn causes an increase in the minimum firmware code boundary, which results in a larger SPI footprint and reliance too much on OBB stage/FSP-S to ensure security enforcement. Such an approach might result in a potentially compromised platform where the OBB stage can be skipped without any critical platform boot or functional impact. Accordingly, a risk may exist in the form of SoC security.

Additional components shown in the firmware layout 20 include CPU microcode, p-UNIT firmware, PMC (power management controller) firmware, IPU (image processing unit) firmware, ISH (integrated sensor hub) firmware, CSME (converged security and manageability engine) firmware, an EC (embedded controller), an authenticated code module (ACM), trusted execution technology (TXT), and SPINOR (serial peripheral interface NOR) memory.

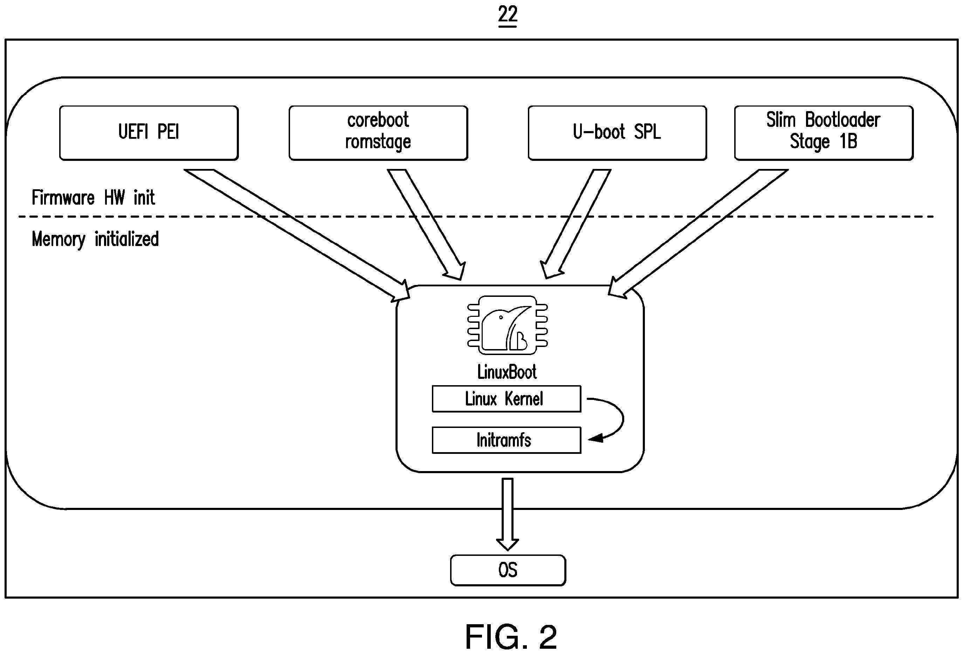

Additionally, the evolution of newer and scalable platforms adds critical changes in the boot flow by reducing the role of firmware (e.g., U-boot SPL/secondary program loader) as most of the OBB module role can be achieved using a LINUX-like open operating system as shown in a boot architecture 22 in FIG. 2 (e.g., replacing the OBB stage). Such an architecture may improve boot reliability and boot time by removing unnecessary code among others.

With the platform hardening requirement being relied on in the OBB stage and not integrated with silicon vendor library, the platform is left in a state where it might not impact platform or device functionality, but the underlying security layer would be void. Accordingly, the platform might be considered an "attackers paradise," which expands to the following scenarios:
- BIOS LOCK (BLE) not enabled
   -- Case number from National Vulnerability Database (NVD)
   --- CVE-2017-3197
   --- CLVA-2016-12-001
   -- Attacker is able to modify BIOSWE bit
   -- Attacker can arbitrarily write to SPI flash from the OS (operating system)
- SmiFlash Handler multiple vulnerability
   -- Case number from National Vulnerability Database (NVD)
   --- CLVA-2016-12-002
   --- CVE-2017-3198
   -- Attacker can elevate privileges to SMM
- FLOCKDN Not enabled
   -- Case number from National Vulnerability Database (NVD)
   --- CVE-2015-3692
   --A privileged attacker with console access can reflash the BIOS of affected systems to an arbitrary image.
- Skip sending EOP HECI (host embedded controller interface) command
   -- Case number from National Vulnerability Database (NVD)
   --- CVE-2018-4251
   --Platform BIOS is continuing to run in Manufacturing Mode or missed to send EOP (End of Post) message results into ME (manageability engine) is still accepting POST MEI (ME interface) message and attackers could send HMR FPO (Host ME Region Flash Protection Override) MKHI (ME kernel Host Interface) command, it opens ME access and an attacker can alter ME firmware by re-flash. A compromised ME firmware might even prevent CPU reset from next boot onwards.

### Technical Problems

Security features not coupled with the silicon vendor provided framework initialization libraries and made available as configurable through optional frameworks leads to vulnerabilities in the system as illustrated above. Additionally, newer boot architectures demand reduced firmware involvement, which further increases the need of an early platform hardening method provided by silicon providers that does not leave the critical platform hardening needs in the hands of external or third-party vendors. Thus, the problem in the existing ecosystem is a lack of technology in the silicon vendor libraries to harden the platform early in the boot phase and reduce platform vulnerabilities. There is also a lack of technology to remove redundant code, which increases boot time leading to a poor user experience and inefficient system resources.

As already noted, all security enforcement is currently handled during a "Post Memory Phase" after DRAM based memory is available for chipset consumption. Accordingly, BIOS flows must wait for DRAM based memory to be available, which consumes more time for security enforcement. Indeed, it may be difficult for platforms to compete in meeting growing customer needs for fast response time, reduced SPI footprint and secured platform (e.g., without those security violations mentioned above with respect to the OBB stage) requirements through existing hardware and firmware initialization sequence.

Embodiments enable early hardening of platform by security enforced silicon code by restructuring more memory at reset for a secured pre-boot environment by enabling security enforcement operations (e.g., ME operations) early in boot process.

First, embodiments modify the hardware to configure the package cache as SRAM and provide more pre-initialized memory at reset for boot firmware. Second, the technology configures the ME UMA (uniform memory access) region from the FSP by sending an SRAM INIT Done (SID) message indicating to ME firmware that SRAM is available, and that the ME UMA is ready for use. Such an approach ensures that all necessary SoC security features are enabled before exiting the boot context. Additionally, embodiments make use of a multi-threaded environment at the pre-boot stage to achieve faster system boot where security enforcement can be run over parallel threads along with other independent IO initializations.

Table II below demonstrates how these technical problems are solved by the enhanced technology described herein.

**Table II**

| | Enhanced | Conventional |
|---|---|---|
| Early platform hardening approach | Ensure early stage platform hardening | Gaps in platform hardening as existing solution is part of optional and late in boot process. |
| | Reduces SPI flash footprint requirement as all necessary SoC initialization is completed early and OS can handle OBB stage. | Late SoC hardening leads to duplicate drivers leading maintenance complexity and extra flash requirement |
| | ∼41% of code size = ∼10% bug count reduction | |
| | Reduction of unnecessary OBB stage will make boot 20 times faster. | Slower boot stage with unnecessary code blocks |

A disconnect in the evolution of the process is a lack of visibility of this large chunk of L4 (level 4) or LLC (last level cache) memory to the boot process, which makes the system resources inefficient. Embodiments address this disconnect in the memory hierarchy during the boot stage of the system by using security enforced verified FSP boot code to ensure secured platform boot.

In one example, the enhanced technology can allocate ME UMA memory much earlier. An equivalent to a DID (DRAM Init Done) message can be sent very early using SRAM memory (e.g., "SRAM Init Done (SID)"). For example, the SID can be sent to ME firmware within 100ms of CPU reset and 600ms from a G3 state (e.g., Advance Configuration and Power Interface/ACPI mechanical off state) upon a power button press. Such an approach provides much wider space inside IBB using FSP-M to complete all recommended SoC enforcement without leaving anything for the OBB to address. Eventually the OBB can be removed later for better response time and reduced SPI flash size, which enhances the user experience.

It may be possible to design early security enforcement even at a "sec" stage in UEFI BIOS or "bootblock" in coreboot after utilizing pre-initialized memory (SRAM) capability, which scientifically helps in reducing the attack surface.

Next generation client SoC architectures may introduce large on-package caches, which will allow novel usages. Access time for the L4 (e.g., "Adamantine" or "ADM") cache may be much less than the DRAM access time, which is used to improve host CPU and security controller communications. Embodiments help to protect innovations in boot optimization. Value is added for high end silicon with higher pre-initialized memory at reset, potentially leading to increased revenue. Having memory available at reset also helps to nullify legacy BIOS assumptions and make a faster and efficient BIOS solution with a reduced firmware stage (e.g., pre-CPU reset stage, IBBL stage and IBB stage) for modern device use cases like Automotive IVI (in-vehicle infotainment, e.g., turn on rear view camera within 2sec), household and industrial robots, etc. Accordingly, new market segments may be available.

Embodiments are able to tightly couple SoC key security recommendations with firmware mandatory phases (e.g., IBBL and/or IBB) specially enfolded with SoC provided at the silicon initialization binary (e.g., FSP-M) to ensure that the platform is always adhering to SoC recommendations. Failures to do so by skipping FSP-M will not permit the platform to boot to the OS. Such an approach eventually reduces the attack surface and provides passive way to protect confidential functional blocks (e.g., intellectual property blocks/IPs).

Additionally, the reduction of OBB is eventually saving ∼41% of code size = ∼10% bug count reduction for any program. Moreover, embodiments help to reduce SPI flash size for ODM/OEM design, which reduce BOM costs. The enhanced technology also significantly improves boot performance - a reduction of unnecessary OBB stage will make boot 20 times faster.

### Platform Changes

Implementations may result in hardware, firmware and visual changes.

Hardware Changes:
Having L4 cache available as part of SRAM may be a new feature that is listed in product literature documents as an additional CPU capability. For example: CPUID (CPU identifier) instructions or a dedicated MSR (model-specific register) read might determine whether the L4 cache accessible from CPU feature is available.

Additionally, the cache size may vary, with the product segment being smaller in the "M segment" and larger in the "P segment" (e.g., with product literature documents listing the sets of assumptions with the new feature).

Firmware Changes:
Silicon manufacturers may use open source BIOS/bootloader solutions to implement embodiments.

As legacy initialization flow assumptions might not hold well with embodiments, the technology may reduce the number of underlying firmware boot stages. Indeed, decompression of final BIOS images may demonstrate the reduction of boot stages.

Visual Changes:
Avoiding platform security vulnerability if the BIOS/Bootloader does not intend to call the OBB stage, may have a visual signature. For example, if visual inspection and/or reverse engineering methods like skipping some key security programming from BIOS/Bootloader still does not show platform vulnerability to security threats, it may be implied that the platform has already incorporated embodiments where SoC integrated firmware using IBB has ensured platform security.

### Implementation Details

Generally, system memory requirement during the firmware/BIOS phase may be very limited. Security controller/HECI1 is a PCI device that requires around ∼64 MB of memory to establish the foundation for host-based communication with security controller at pre boot environment.

An auxiliary processor core/microcontroller initializes a portion of L4 (e.g., over SoC base die) cache (as per requirement given above) as SRAM for platform firmware usage. Refer to "Modified Pre-Reset initialization flow" below.

Product literature documents may capture the SRAM physical start and limits for firmware design.

The firmware flow may be changed so that FSP can allocate required memory for ME UMA from SRAM mapped memory itself without relying on DRAM based memory and call security module inside FSP for ensuring verified boot. Since multi-core capability is available at the process reset due to availability of memory, security enforcement can run in parallel as well.

For security reasons, it might be required to build an additional security lockdown solution on top of the SRAM range. In such a case, the L4 SRAM range is disabled/locked-down before booting to OS. The disable/lockdown cannot be overridden without a platform reset. In an embodiment, FSP (e.g., closed source binary blobs) handles the lockdown with an "End of Firmware" boot event.

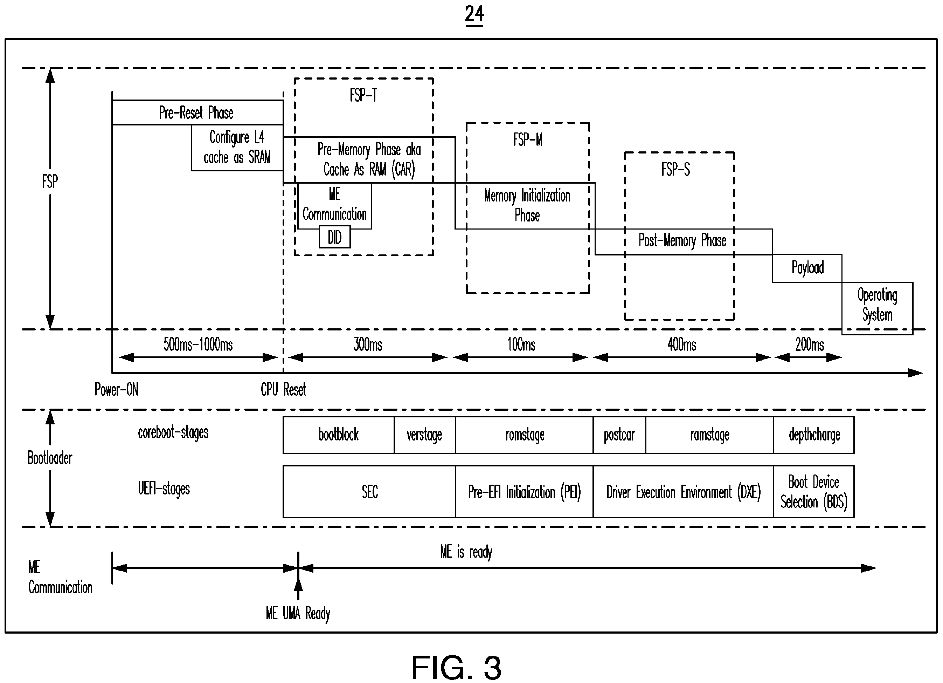

FIG. 3 shows a modified pre-reset boot sequence 24 to initialized SRAM before a core reset. More particularly, FIG. 3 illustrates the modified firmware boot flow of a system where the L4 cache is configured as SRAM at pre-reset to optimize firmware in order to adhere the SoC security recommendations.

Phase #1 relies on the below principals:
- a hardware change to configure the package cache as SRAM for firmware access;
- more pre-initialized memory at reset for firmware to use for allocating ME UMA memory for early security controller communication;
- firmware flows can be independent of DRAM memory training, which takes longer time to initialize (e.g., access to the L4 cache memory range would be much faster compare to DRAM memory access).

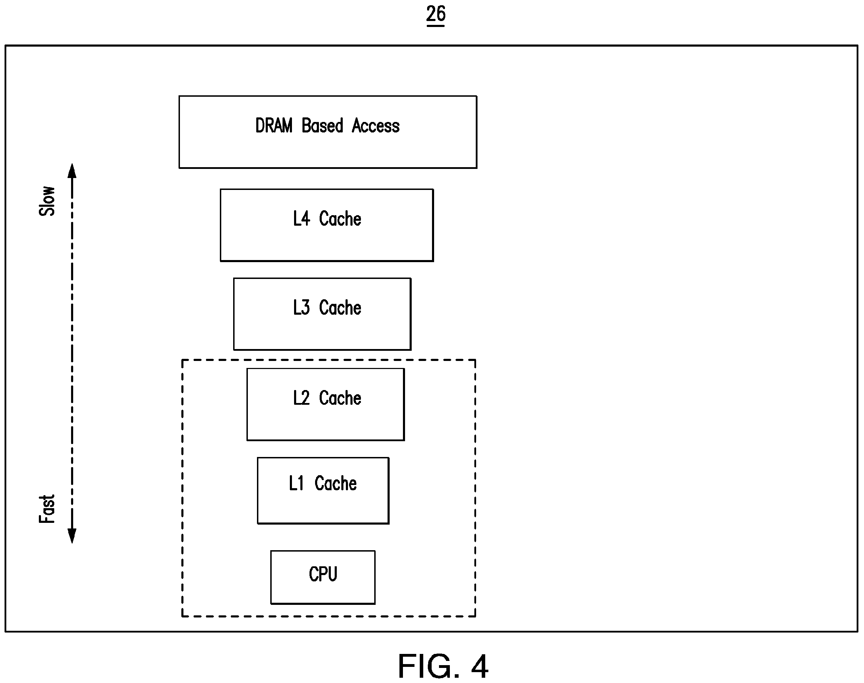

FIG. 4 demonstrates response times in various system memory accesses for a memory hierarchy 26. Early firmware stages (e.g., before DRAM initialization) may be avoided to reduce the firmware footprint. For example, embodiments do not need to use cache-as-ram (CAR, e.g., "tempRAM init") in the BIOS flow. Such an approach reduces complicated assembly programming in the bootloader space. FSP-T may decide to allocate the requested ME UMA memory from SRAM resources and then write the ME UMA base address to the MSEG_BASE register within ∼100ms of the CPU reset and permit the security module inside FSP-M to further send the MEI (e.g., much earlier in boot flow compared to after DRAM training in current flow). CAR tear down logic may also be avoided. Embodiments avoid switching between temporary memory (CAR) to permanent memory (DRAM based) in bootloader space and the entire bootloader execution can be driven out of SRAM based fixed memory. In one example, DRAM initialization is performed at the end of the bootloader boot sequence to make sure the payload or OS can use DRAM based resources for higher memory requirements. In this process, the entire SoC security enforcement from BIOS will be decoupled from DRAM resources being available and used. Accordingly, no bottleneck is encountered during MRC (memory reference code) initializing DRAM resources in the current flow.

After that, the FSP sends the SRAM INIT Done (SID) message indicating to ME firmware that SRAM is available, and ME UMA is ready for use. The SRAM INIT Done message may be sent by the FSP on all boot flows.

After the FSP sends the SID message, BIOS waits for a SID ACK (acknowledgement) message. This ACK message includes a requested "ME BIOS Action", which BIOS acts on as soon as possible.

As SID and ME UMA setting up is occurring very early in the boot flow (e.g., within ∼100ms) of CPU reset compared to the MRC initialization done in the existing flow (e.g., ∼20-40sec in a first boot or ∼400ms in a consecutive boot) might also help to save system boot time by avoiding an additional MRC initialization when a "ME BIOS Action" requests a platform reset.

For example, consider the existing flow where "ME BIOS Action" is handled after MRC initialization is done but the MRC cache is not yet saved by bootloader. Upon issuing platform reset, on next boot, the FSP will not find the MRC cache because the bootloader was used to save MRC cache during OBB stage. The result will be a repeat of MRC initialization, which causes ∼20-40sec extra in firmware boot time. This waste of platform boot time and results in a poor user experience the because ME UMA region has been set based on DRAM resource dependency. Making the ME UMA region independent of the DRAM resources and using L4 memory as SRAM or LLC cache avoids this additional MRC training due to the "ME BIOS Action" reset. In order to satisfy security policies, the SRAM memory range may be locked down before booting to the operating system.

Phase #2 involves an enforced verified FSP boot using the L4 cache as SRAM at reset.

Embodiments use design requirements described in FIGs. 3 and 4, which make larger and faster memory available at reset and modify firmware flows to use that pre-initialized memory rather define FSP flow to ensure secure SoC boot without being dependent over DRAM resources.

Additionally, embodiments make use of a multi-threaded environment at the pre-boot stage to achieve faster system boot where security enforcement can be run over parallel threads along with another independent IO initialization.

Hardware & Firmware Design details:
L4 cache is accessible for the CPU as part of SRAM;

Embodiments are able to overcome limited memory available at reset constraint using Phase #1, therefore it is feasible to bring all cores (e.g., boot strap processors/BSPs and application processors/APs) from reset early and allocate resources for the APs same as BSP to perform parallel tasks.

Embodiments disable/lockdown the L4 range before booting to OS.

FIG. 3 illustrates the modified firmware boot flow of a system where the L4 cache is configured as SRAM at pre-reset and CPU is enables at reset without any memory constraint to ensure verified firmware boot. More pre-initialized memory is available at reset for firmware to use. Firmware flows can be independent of DRAM memory training, which takes a longer time to initialize. Early firmware stages (e.g., before DRAM initialization) can be avoided to reduce the firmware footprint.
a) During Phase #1, an auxiliary processor core/microcontroller inside the SoC initializes the L4 cache as SRAM and does not require involvement of the core.
b) More memory is available before the core is released from reset.
c) The BIOS image is loaded into SRAM even before the core is out from reset.
d) It is not necessary to use cache-as-ram (CAR) (e.g., "tempRAM init") in the BIOS flow. Such an approach reduces complicated assembly programming in the bootloader space.
e) The CPU, chipset and PCI (peripheral components interconnect) enumeration can be performed early without being dependent on DRAM initialization. Rather SRAM is used to perform all CPU/chipset programming.

Modifications to IBBL/FSP-T:
f) Read ME UMA SIZE (MUSZ) field at Bus 0: Device 22: Function 0: Register 0x44 [bit 0:5] which indicates the required memory size for ME. Typically <= 128MB of memory for ME UMA region to allocate.
g) Carve out a significantly larger chunk of memory from the L4-SRAM bucket for ME UMA use.
h) Enter into the SRAM Init Done procedure by sending SRAM INIT Done HECI command to ME firmware.
i) HECI SRAM Init Done completes successfully and responds back to HOST CPU with SRAM Init Done ACK.
j) Upon receiving SID ACK, FSP reads "ME BIOS Action"
k) If the action is to reset platform, start again from a) above. Else BIOS continues to POST.
1) Assign IMR base and limit for security controller.

Modifications to IBB/FSP-M:

The host CPU and Security Controller communication: BIOS continues to use SRAM based memory resources for sending security related HECI command and ME device register accesses.
m) ChipsetInit: After the ME UMA is ready at end of the IBBL stage, FSP- M inside the IBB stage sends a Chipset Initialization table to ME firmware for PCIE related device HSIO (high speed input output) lane and FIA (flexible I/O adapter) programming based on FSP-M related policy configuration for PCIE based device.
n) End of POST (EOP): IBB/FSP-M will send EOP message to ME firmware and proceed further after receiving successful response against EOP message. As the platform will not be able to boot further if the IBB/FSP-M call is being skipped, the IBB does not permit system boot to OS an ACK is not received from the ME controller upon sending EOP. If the EOP is successful, this message will take ME firmware out of Pre-Boot mode and transition to OS mode. Once the ME is in the OS mode, the ME will not accept any MEI message that is used in pre-boot environment. Otherwise, the FSP-M will disable ME using a PMC (power management controller) based IPC command to ensure that the HECI controller is not being exposed (e.g., HECI controller PCI device Bus 0: Device 22: Function 0 would be visible over the PCI tree) after booting to OS. Thus, any MEI message that makes the system prone to attack will not be accepted. Ensuring that EOP is being sent within the IBB is qualified to ensure a verified system boot as the last operation for the normal BIOS security initial flow.
o) Configure ME devices: As all HECI communication is done prior to this stage, a better platform power number us used to place unused devices into the D0i3 state (e.g., ACPI device state).

There are typically three HECI devices on a PCH (platform controller hub, e.g., input/output module). Only HECI1 is enabled, with others dependent on features enabled. When HECI1 is not operating in a healthy state (e.g., the Normal path), then FSP-S disables HECI (e.g., via Private CR disable register) and BIOS will first place HECI into the D0i3 state, then the D3 state and then disable HECI. If BIOS does not disable HECI, BIOS places the device into the D0i3 state before loading OS.

There are SOL (serial over local area network/LAN) and USBr (Universal Serial Bus redirection) devices presented on the PCH. Only enable SOL and USBr devices when operating with a corresponding ME SKU (stock keeping unit, e.g., Corporate SKU).

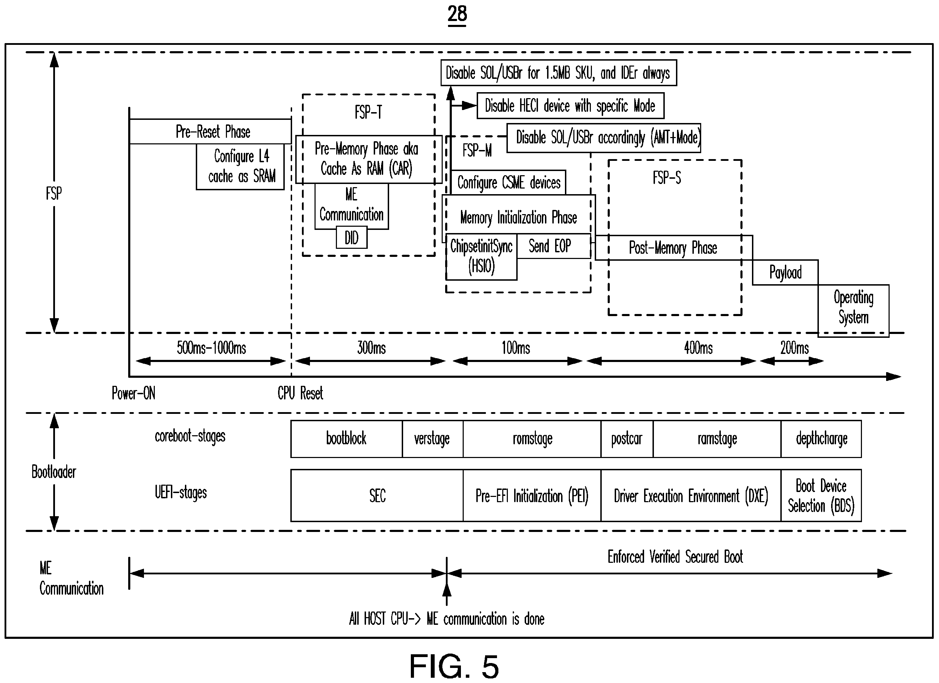

FIG. 5 shows a modified ME communication flow 28 inside the IBB.
p) SPI Lockdown: Ingredients inside the IBB such as the bootloader and FSP-M work together in order to store the MRC cache immediately after the DRAM is available. Such an approach helps the FSP-M to set a Flash Configuration Lock-Down (FLOCKDN) flash programming register before booting to OS. The technology also enables Flash Protected Range n (BIOS_FPRx) to protect illegal SPI writes (event log, MRC cache etc.).
q) BIOS control register: The FSP-M is able to set BIOS control registers bits such as BiosInterfaceLockDown (BILD), BIOS Lock Enable (BLE), BIOS Write Enable (BWE), and SMM BIOS write Protection (SMM BWP).

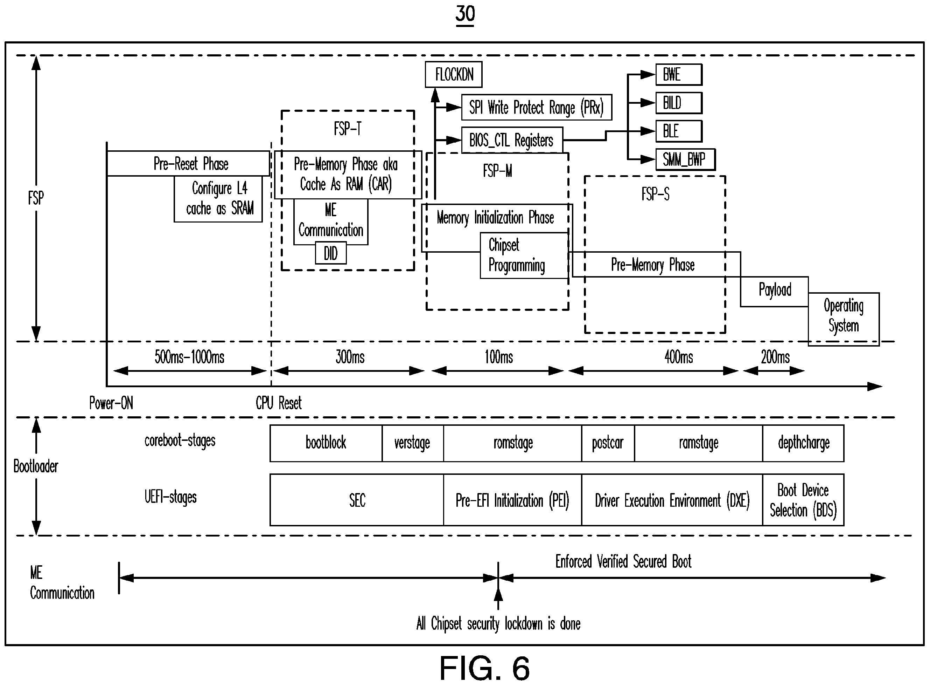

FIG. 6 shows a modified chipset programming flow 30 inside the IBB.
r) At this stage, at the end of the IBB, the FSP-M has enforced all possible SoC chipset programming and security communication to ensure a verified firmware boot.
s) If an OBB stage exists, then the OBB stage might continue to perform those additional programming as below:
   - GPIO (general purpose input-output) initialization- GPIO for SoC recommended functional blocks and board related components;
   - Multi-Processor initialization;
   - Initialize Graphics Device using GOP service;
   - Initialize block devices for boot to OS;
   - PCI device enumeration;
   - Publish ACPI tables.

Otherwise, firmware boot control transfers to payloads such as linuxboot to perform those operations after replacing the OBB stage with a payloader (e.g., phase "v") below).
t) CAR tear down logic may also be avoided.
u) Avoid switching between temporary memory (CAR) to permanent memory (DRAM based) in the bootloader space and the entire bootloader execution can be driven out of SRAM based fixed memory.
v) Perform DRAM initialization at the end of the bootloader boot sequence to ensure that the payload or OS can use DRAM based resources for higher memory requirements.
w) At end of post service, BIOS locks down the SRAM ranges to avoid any accesses decoding this range.

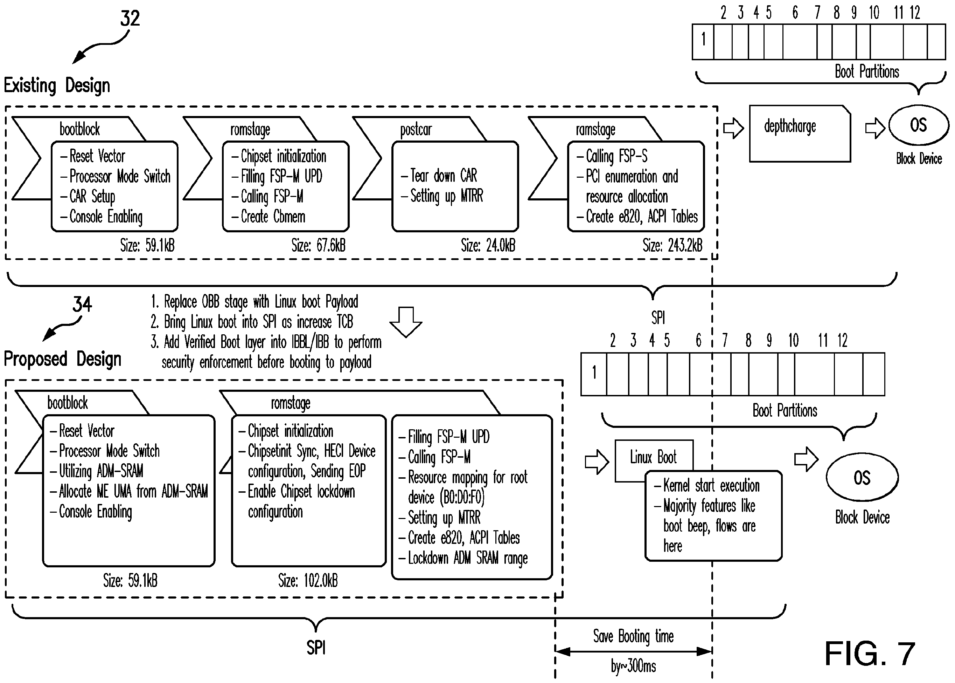

FIG. 7 shows an existing 32 vs. enhanced 34 early enforced security initialization (e.g., coreboot) Flow with pre-initialized SRAM memory at reset.

Impact on Firmware:
- Secured firmware boot even though the OBB/FSP-S stage is not included into production BIOS IFWI (integrated firmware/FW image).
- Reduction of OBB is eventually saving ∼41% of code size = ∼10% bug count reduction.
- This effort might help OEMs/ODMs to reduce SPI flash size.
- Improve significant boot performance - Able to reduce additional ∼300-350ms of booting time on latest CHROME platform.
- Help to design lightweight firmware using an L4 cache as SRAM, which conducts minimum and only key functional blocks with FSP (e.g., SoC Silicon initialization blob) and bootloader methodology to boot to OS.

Interaction with new security technologies:

For future client CPUs, there may be an embedded security engine (ESE) that provides centralized security services. This approach of loading and authenticating the FSP into the expansive L4 cache can have the associated FSP image authentication relegated to the ESE. As a result, potential flaws may be avoided in BIOS implementations of the security logic.

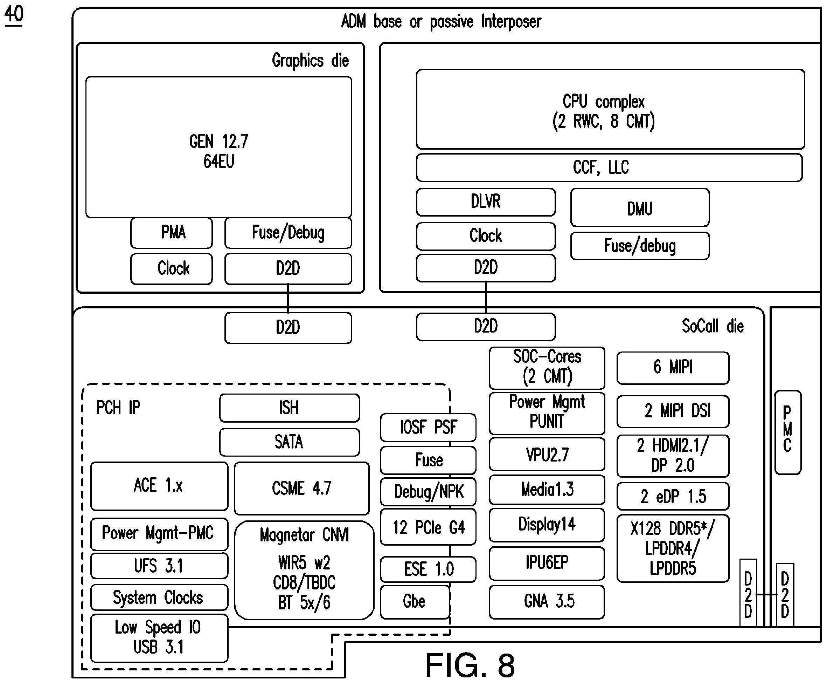

FIG. 8 shows a hardware and firmware 40 design in which a security authentication is offloaded to an ESE 42. In an embodiment, the ESE 42 may be invoked for an upcoming FSP state verification. If validated, the ESE 42 may pass control to the respective FSP entry point.

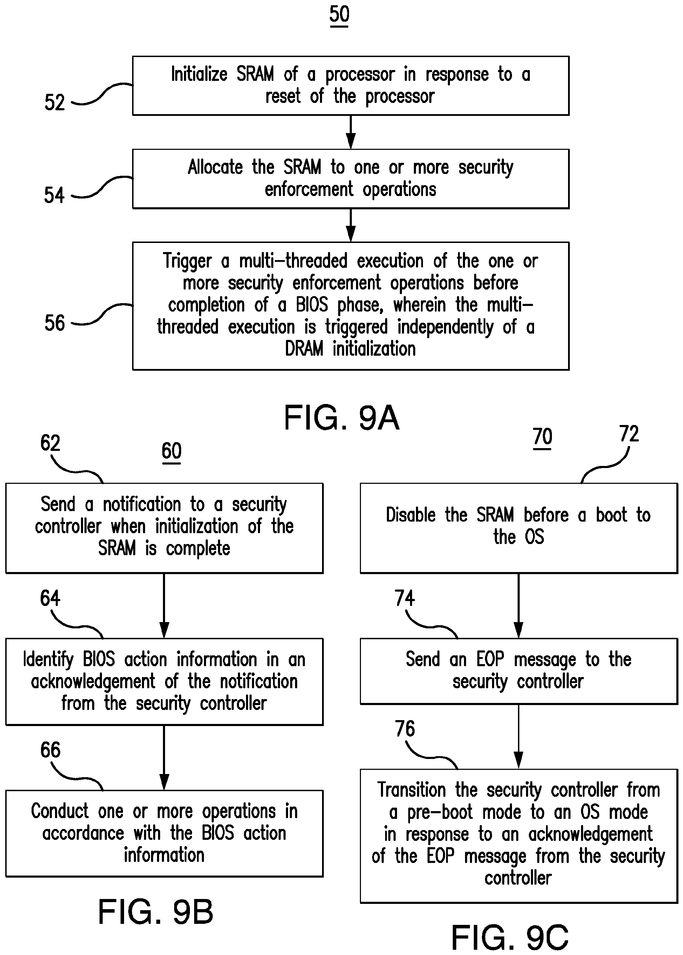

FIG. 9A shows a method 50 of conducting a silicon initialization. The method 50 may be implemented in one or more modules as a set of logic instructions stored in a machine- or computer-readable storage medium such as random access memory (RAM), read only memory (ROM), programmable ROM (PROM), firmware, flash memory, etc., in configurable logic such as, for example, programmable logic arrays (PLAs), field programmable gate arrays (FPGAs), complex programmable logic devices (CPLDs), in fixed-functionality logic hardware using circuit technology such as, for example, application specific integrated circuit (ASIC), complementary metal oxide semiconductor (CMOS) or transistor-transistor logic (TTL) technology, or any combination thereof.

For example, computer program code to carry out operations shown in the method may be written in any combination of one or more programming languages, including an object oriented programming language such as JAVA, SMALLTALK, C++ or the like and conventional procedural programming languages, such as the "C" programming language or similar programming languages. Additionally, logic instructions might include assembler instructions, instruction set architecture (ISA) instructions, machine instructions, machine dependent instructions, microcode, state-setting data, configuration data for integrated circuitry, state information that personalizes electronic circuitry and/or other structural components that are native to hardware (e.g., host processor, central processing unit/CPU, microcontroller, etc.).

The illustrated processing block 52 provides for initializing SRAM of a processor in response to a reset of the processor. In an embodiment, the SRAM is located in a last level cache (LLC) of the processor. Additionally, block 52 may include reading size information from a register, wherein the SRAM is initialized based on the size information. In one example, block 54 allocates the SRAM to one or more security enforcement operations. Additionally, block 56 may trigger a multi-threaded execution of the one or more security enforcement operations before completion of a BIOS phase. In the illustrated example, the multi-threaded execution is triggered independently of a DRAM initialization. In an embodiment, the term independently refers to the ability to trigger the multi-threaded execution regardless of whether the DRAM initialization has occurred.

FIG. 9B shows a method 60 of operating an IBB. The method 60 may be implemented in one or more modules as a set of logic instructions stored in a machine- or computer-readable storage medium such as RAM, ROM, PROM, firmware, flash memory, etc., in configurable logic such as, for example, PLAs, FPGAs, CPLDs, in fixed-functionality logic hardware using circuit technology such as, for example, ASIC, CMOS or TTL technology, or any combination thereof.

Illustrated block 62 provides for sending a notification to a security controller when initialization of the SRAM is complete. In an embodiment, block 64 identifies BIOS action information in an acknowledgement of the notification from the security controller. Additionally, block 66 conducts one or more operations (e.g., reset operation) in accordance with the BIOS action information.

FIG. 9C shows a method 70 of operating an IBBL. The method 70 may be implemented in one or more modules as a set of logic instructions stored in a machine- or computer-readable storage medium such as RAM, ROM, PROM, firmware, flash memory, etc., in configurable logic such as, for example, PLAs, FPGAs, CPLDs, in fixed-functionality logic hardware using circuit technology such as, for example, ASIC, CMOS or TTL technology, or any combination thereof.

Illustrated block 72 provides for disabling the SRAM before a boot to the OS. In an embodiment, block 74 sends an EOP message to the security controller. Additionally, block 76 transitions the security controller from a pre-boot mode to an OS mode in response to an acknowledgement of the EOP message from the security controller.

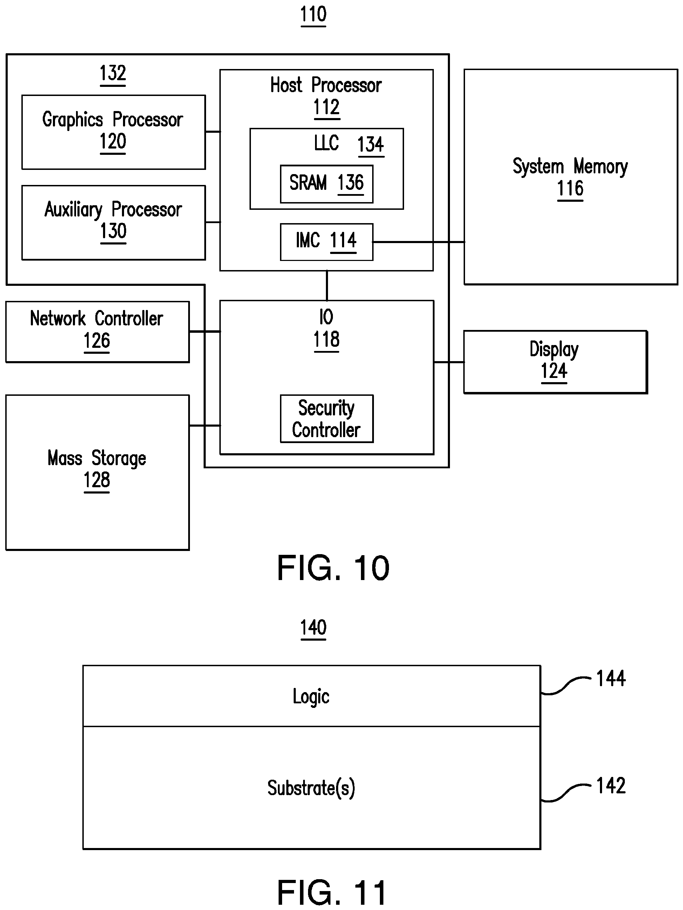

Turning now to FIG. 10, a performance-enhanced computing system 110 is shown. The system 110 may generally be part of an electronic device/platform having computing functionality (e.g., personal digital assistant/PDA, notebook computer, tablet computer, convertible tablet, server), communications functionality (e.g., smart phone), imaging functionality (e.g., camera, camcorder), media playing functionality (e.g., smart television/TV), wearable functionality (e.g., watch, eyewear, headwear, footwear, jewelry), vehicular functionality (e.g., car, truck, motorcycle), robotic functionality (e.g., autonomous robot), Internet of Things (IoT) functionality, etc., or any combination thereof.

In the illustrated example, the system 110 includes a host processor 112 (e.g., CPU) having an integrated memory controller (IMC, which may be distributed across multiple dies) 114 that is coupled to a system memory 116 (e.g., DRAM). In an embodiment, an IO module 118 is coupled to the host processor 112. The illustrated IO module 118 communicates with, for example, a display 124 (e.g., touch screen, liquid crystal display/LCD, light emitting diode/LED display), a network controller 126 (e.g., wired and/or wireless), and a mass storage 128 (e.g., hard disk drive/HDD, optical disc, solid-state drive/SSD, flash memory, etc.). The system 110 may also include a graphics processor 120 (e.g., graphics processing unit/GPU). In an embodiment, the host processor 112, the IO module 118 and the graphics processor 120 are incorporated with an auxiliary processor 130 into an SoC 132. Additionally, the host processor 112 may include an LLC 134 with SRAM 136.

In one example, the SRAM 136 includes a set of executable silicon initialization instructions (e.g., FSP), which when executed by the auxiliary processor 130, cause the computing system 110 and/or auxiliary processor 130 to implement one or more aspects of the method 50 (FIG. 9A), the method 60 (FIG. 9B) and/or the method 70 (FIG. 9C), already discussed. Thus, the auxiliary processor 130 may initialize the SRAM 136 in response to a reset of the SoC 132, allocate the SRAM 136 to one or more security enforcement operations, and trigger a multi-threaded execution of the one or more security enforcement operations before completion of a BIOS phase. Additionally, the multi-threaded execution may be triggered independently of an initialization of the system memory 116 (e.g., DRAM).

FIG. 11 shows a semiconductor apparatus 140 (e.g., chip and/or package including an auxiliary processor). The illustrated apparatus 140 includes one or more substrates 142 (e.g., silicon, sapphire, gallium arsenide) and logic 144 (e.g., transistor array and other integrated circuit/IC components) coupled to the substrate(s) 142. In an embodiment, the logic 144 implements one or more aspects of the method 50 (FIG. 9A), the method 60 (FIG. 9B) and/or the method 70 (FIG. 9C), already discussed. Thus, the logic 144 may initialize SRAM of a processor (e.g., host processor) in response to a reset of the processor, allocate the SRAM to one or more security enforcement operations, and trigger a multi-threaded execution of the security enforcement operation(s) before completion of a BIOS phase. Additionally, the multi-threaded execution may be triggered independently of an initialization of a DRAM initialization.

The logic 144 may be implemented at least partly in configurable logic or fixed-functionality hardware logic. In one example, the logic 144 includes transistor channel regions that are positioned (e.g., embedded) within the substrate(s) 142. Thus, the interface between the logic 144 and the substrate(s) 142 may not be an abrupt junction. The logic 144 may also be considered to include an epitaxial layer that is grown on an initial wafer of the substrate(s) 142.

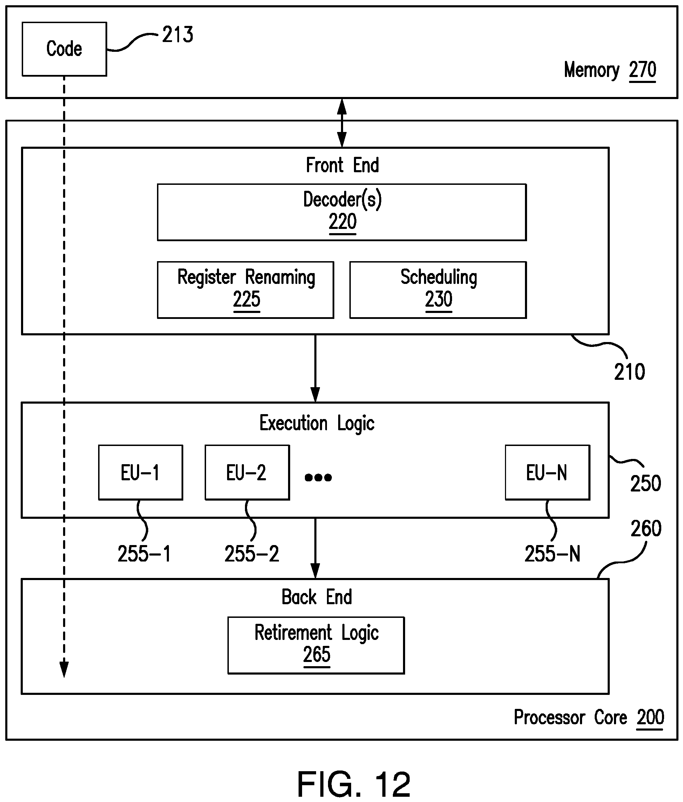

FIG. 12 illustrates a processor core 200 according to one embodiment. The processor core 200 may be the core for any type of processor, such as a micro-processor, an embedded processor, a digital signal processor (DSP), a network processor, or other device to execute code. Although only one processor core 200 is illustrated in FIG. 12, a processing element may alternatively include more than one of the processor core 200 illustrated in FIG. 12. The processor core 200 may be a single-threaded core or, for at least one embodiment, the processor core 200 may be multithreaded in that it may include more than one hardware thread context (or "logical processor") per core.

FIG. 12 also illustrates a memory 270 coupled to the processor core 200. The memory 270 may be any of a wide variety of memories (including various layers of memory hierarchy) as are known or otherwise available to those of skill in the art. The memory 270 may include one or more code 213 instruction(s) to be executed by the processor core 200, wherein the code 213 may implement the method 50 (FIG. 9A), the method 60 (FIG. 9B) and/or the method 70 (FIG. 9C), already discussed. The processor core 200 follows a program sequence of instructions indicated by the code 213. Each instruction may enter a front end portion 210 and be processed by one or more decoders 220. The decoder 220 may generate as its output a micro operation such as a fixed width micro operation in a predefined format, or may generate other instructions, microinstructions, or control signals which reflect the original code instruction. The illustrated front end portion 210 also includes register renaming logic 225 and scheduling logic 230, which generally allocate resources and queue the operation corresponding to the convert instruction for execution.

The processor core 200 is shown including execution logic 250 having a set of execution units 255-1 through 255-N. Some embodiments may include a number of execution units dedicated to specific functions or sets of functions. Other embodiments may include only one execution unit or one execution unit that can perform a particular function. The illustrated execution logic 250 performs the operations specified by code instructions.

After completion of execution of the operations specified by the code instructions, back end logic 260 retires the instructions of the code 213. In one embodiment, the processor core 200 allows out of order execution but requires in order retirement of instructions. Retirement logic 265 may take a variety of forms as known to those of skill in the art (e.g., re-order buffers or the like). In this manner, the processor core 200 is transformed during execution of the code 213, at least in terms of the output generated by the decoder, the hardware registers and tables utilized by the register renaming logic 225, and any registers (not shown) modified by the execution logic 250.

Although not illustrated in FIG. 12, a processing element may include other elements on chip with the processor core 200. For example, a processing element may include memory control logic along with the processor core 200. The processing element may include I/O control logic and/or may include I/O control logic integrated with memory control logic. The processing element may also include one or more caches.

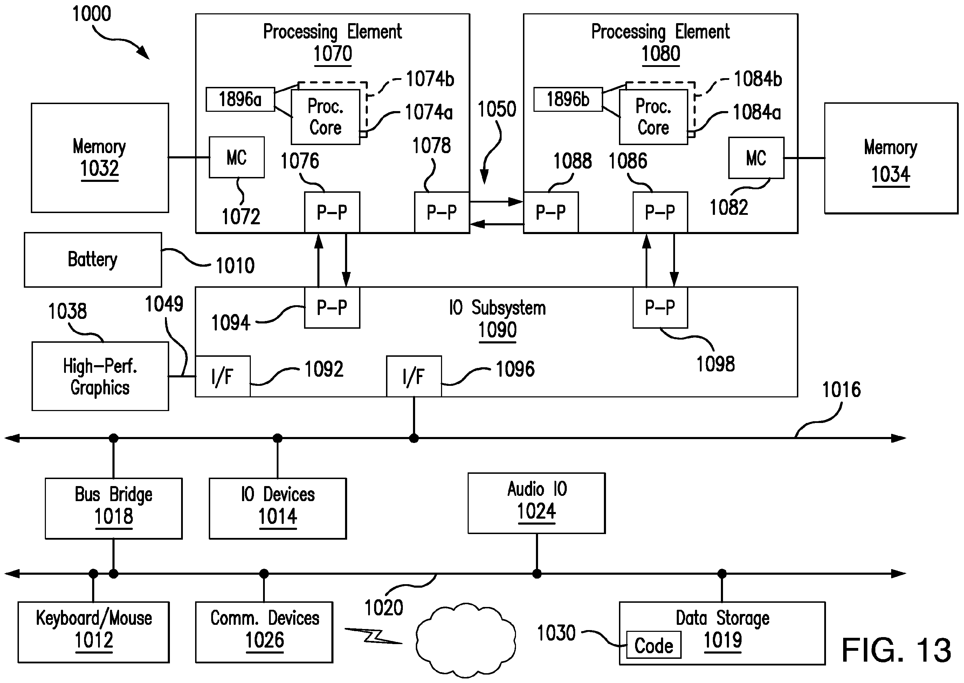

Referring now to FIG. 13, shown is a block diagram of a computing system 1000 embodiment in accordance with an embodiment. Shown in FIG. 13 is a multiprocessor system 1000 that includes a first processing element 1070 and a second processing element 1080. While two processing elements 1070 and 1080 are shown, it is to be understood that an embodiment of the system 1000 may also include only one such processing element.

The system 1000 is illustrated as a point-to-point interconnect system, wherein the first processing element 1070 and the second processing element 1080 are coupled via a point-to-point interconnect 1050. It should be understood that any or all of the interconnects illustrated in FIG. 13 may be implemented as a multi-drop bus rather than point-to-point interconnect.

As shown in FIG. 13, each of processing elements 1070 and 1080 may be multicore processors, including first and second processor cores (i.e., processor cores 1074a and 1074b and processor cores 1084a and 1084b). Such cores 1074a, 1074b, 1084a, 1084b may be configured to execute instruction code in a manner similar to that discussed above in connection with FIG. 12.

Each processing element 1070, 1080 may include at least one shared cache 1896a, 1896b. The shared cache 1896a, 1896b may store data (e.g., instructions) that are utilized by one or more components of the processor, such as the cores 1074a, 1074b and 1084a, 1084b, respectively. For example, the shared cache 1896a, 1896b may locally cache data stored in a memory 1032, 1034 for faster access by components of the processor. In one or more embodiments, the shared cache 1896a, 1896b may include one or more mid-level caches, such as level 2 (L2), level 3 (L3), level 4 (L4), or other levels of cache, a last level cache (LLC), and/or combinations thereof.

While shown with only two processing elements 1070, 1080, it is to be understood that the scope of the embodiments are not so limited. In other embodiments, one or more additional processing elements may be present in a given processor. Alternatively, one or more of processing elements 1070, 1080 may be an element other than a processor, such as an accelerator or a field programmable gate array. For example, additional processing element(s) may include additional processors(s) that are the same as a first processor 1070, additional processor(s) that are heterogeneous or asymmetric to processor a first processor 1070, accelerators (such as, e.g., graphics accelerators or digital signal processing (DSP) units), field programmable gate arrays, or any other processing element. There can be a variety of differences between the processing elements 1070, 1080 in terms of a spectrum of metrics of merit including architectural, micro architectural, thermal, power consumption characteristics, and the like. These differences may effectively manifest themselves as asymmetry and heterogeneity amongst the processing elements 1070, 1080. For at least one embodiment, the various processing elements 1070, 1080 may reside in the same die package.

The first processing element 1070 may further include memory controller logic (MC) 1072 and point-to-point (P-P) interfaces 1076 and 1078. Similarly, the second processing element 1080 may include a MC 1082 and P-P interfaces 1086 and 1088. As shown in FIG. 13, MC's 1072 and 1082 couple the processors to respective memories, namely a memory 1032 and a memory 1034, which may be portions of main memory locally attached to the respective processors. While the MC 1072 and 1082 is illustrated as integrated into the processing elements 1070, 1080, for alternative embodiments the MC logic may be discrete logic outside the processing elements 1070, 1080 rather than integrated therein.

The first processing element 1070 and the second processing element 1080 may be coupled to an I/O subsystem 1090 via P-P interconnects 1076 1086, respectively. As shown in FIG. 13, the I/O subsystem 1090 includes P-P interfaces 1094 and 1098. Furthermore, I/O subsystem 1090 includes an interface 1092 to couple I/O subsystem 1090 with a high performance graphics engine 1038. In one embodiment, bus 1049 may be used to couple the graphics engine 1038 to the I/O subsystem 1090. Alternately, a point-to-point interconnect may couple these components.

In turn, I/O subsystem 1090 may be coupled to a first bus 1016 via an interface 1096. In one embodiment, the first bus 1016 may be a Peripheral Component Interconnect (PCI) bus, or a bus such as a PCI Express bus or another third generation I/O interconnect bus, although the scope of the embodiments are not so limited.

As shown in FIG. 13, various I/O devices 1014 (e.g., biometric scanners, speakers, cameras, sensors) may be coupled to the first bus 1016, along with a bus bridge 1018 which may couple the first bus 1016 to a second bus 1020. In one embodiment, the second bus 1020 may be a low pin count (LPC) bus. Various devices may be coupled to the second bus 1020 including, for example, a keyboard/mouse 1012, communication device(s) 1026, and a data storage unit 1019 such as a disk drive or other mass storage device which may include code 1030, in one embodiment. The illustrated code 1030 may implement the method 50 (FIG. 9A), the method 60 (FIG. 9B) and/or the method 70 (FIG. 9C), already discussed, and may be similar to the code 213 (FIG. 12), already discussed. Further, an audio I/O 1024 may be coupled to second bus 1020 and a battery 1010 may supply power to the computing system 1000.

Note that other embodiments are contemplated. For example, instead of the point-to-point architecture of FIG. 13, a system may implement a multi-drop bus or another such communication topology. Also, the elements of FIG. 13 may alternatively be partitioned using more or fewer integrated chips than shown in FIG. 13.

### Additional Notes and Examples

Example 1 includes a computing system comprising a network controller, a system memory including dynamic random access memory (DRAM), a system on chip (SoC) coupled to the network controller and the DRAM, the SoC including an auxiliary processor and a host processor, wherein the host processor includes a static random access memory (SRAM), and wherein the SRAM includes a set of executable silicon initialization instructions, which when executed by the auxiliary processor, cause the computing system to initialize the SRAM in response to a reset of the SoC, allocate the SRAM to one or more security enforcement operations, and trigger a multi-threaded execution of the one or more security enforcement operations before completion of a basic input output system (BIOS) phase, wherein the multi-threaded execution is triggered independently of an initialization of the DRAM

Example 2 includes the computing system of Example 1, wherein the SRAM is located in a last level cache of the host processor.

Example 3 includes the computing system of Example 1, further including a register, wherein the silicon initialization instructions, when executed, further cause the computing system to read size information from the register, and wherein the SRAM is initialized based on the size information.

Example 4 includes the computing system of Example 1, wherein the SoC further includes a security controller, wherein the silicon initialization instructions, when executed, further cause the computing system to send a notification to the security controller when initialization of the SRAM is complete, identify BIOS action information in an acknowledgment of the notification from the security controller, and conduct one or more operations in accordance with the BIOS action information.

Example 5 includes the computing system of Example 1, further including a security controller, wherein the silicon initialization instructions, when executed, further cause the computing system to send an end of post (EOP) message to the security controller, and transition the security controller from a pre-boot mode to an operating system mode in response to an acknowledgement of the EOP message from the security controller.

Example 6 includes the computing system of any one of Examples 1 to 5, wherein the silicon initialization instructions, when executed, further cause the computing system to disable the SRAM before a boot to an operating system.

Example 7 includes a semiconductor apparatus comprising one or more substrates, and logic coupled to the one or more substrates, wherein the logic is implemented at least partly in one or more of configurable logic or fixed-functionality hardware logic, the logic coupled to the one or more substrates to initialize static random access memory (SRAM) of a processor in response to a reset of the processor, allocate the SRAM to one or more security enforcement operations, and trigger a multi-threaded execution of the one or more security enforcement operations before completion of a basic input output system (BIOS) phase, wherein the multi-threaded execution is triggered independently of a dynamic RAM (DRAM) initialization.

Example 8 includes the apparatus of Example 7, wherein the SRAM is to be located in a last level cache of the processor.

Example 9 includes the apparatus of Example 7, wherein the logic coupled to the one or more substrates is to read size information from a register, and wherein the SRAM is initialized based on the size information.

Example 10 includes the apparatus of Example 7, wherein the logic coupled to the one or more substrates is to send a notification to a security controller when initialization of the SRAM is complete, identify BIOS action information in an acknowledgment of the notification from the security controller, and conduct one or more operations in accordance with the BIOS action information.

Example 11 includes the apparatus of Example 7, wherein the logic coupled to the one or more substrates is to send an end of post (EOP) message to a security controller, and transition the security controller from a pre-boot mode to an operating system mode in response to an acknowledgement of the EOP message from the security controller.

Example 12 includes the apparatus of any one of Examples 7 to 11, wherein the logic coupled to the one or more substrates is to disable the SRAM before a boot to an operating system.

Example 13 includes the apparatus of any one of Examples 7 to 12, wherein the logic coupled to the one or more substrates includes transistor channel regions that are positioned within the one or more substrates.

Example 14 includes at least one computer readable storage medium comprising a set of executable silicon initialization instructions, which when executed by a computing system, cause the computing system to initialize static random access memory (SRAM) of a processor in response to a reset of the processor, allocate the SRAM to one or more security enforcement operations, and trigger a multi-threaded execution of the one or more security enforcement operations before completion of a basic input output system (BIOS) phase, wherein the multi-threaded execution is triggered independently of a dynamic RAM (DRAM) initialization.

Example 15 includes the at least one computer readable storage medium of Example 14, wherein the SRAM is to be located in a last level cache of the processor.

Example 16 includes the at least one computer readable storage medium of Example 14, wherein the silicon initialization instructions, when executed, further cause the computing system to read size information from a register, and wherein the SRAM is initialized based on the size information.

Example 17 includes the at least one computer readable storage medium of Example 14, wherein the silicon initialization instructions, when executed, further cause the computing system to send a notification to a security controller when initialization of the SRAM is complete, identify BIOS action information in an acknowledgment of the notification from the security controller, and conduct one or more operations in accordance with the BIOS action information.

Example 18 includes the at least one computer readable storage medium of Example 14, wherein the silicon initialization instructions, when executed, further cause the computing system to send an end of post (EOP) message to a security controller, and transition the security controller from a pre-boot mode to an operating system mode in response to an acknowledgement of the EOP message from the security controller.

Example 19 includes the at least one computer readable storage medium of any one of Examples 14 to 18, wherein the silicon initialization instructions, when executed, further cause the computing system to disable the SRAM before a boot to an operating system.

Example 20 includes a method comprising initializing static random access memory (SRAM) of a processor in response to a reset of the processor, allocating the SRAM to one or more security enforcement operations, and triggering a multi-threaded execution of the one or more security enforcement operations before completion of a basic input output system (BIOS) phase, wherein the multi-threaded execution is triggered independently of a dynamic RAM (DRAM) initialization.

Example 21 includes the method of Example 20, wherein the SRAM is located in a last level cache of the processor.

Example 22 includes the method of Example 20, further including reading size information from a register, wherein the SRAM is initialized based on the size information.

Example 23 includes the method of Example 20, further including sending a notification to a security controller when initialization of the SRAM is complete, identifying BIOS action information in an acknowledgement of the notification from the security controller, and conducting one or more operations in accordance with the BIOS action information.

Example 24 includes the method of Example 20, further including sending an end of post (EOP) message to a security controller, and transitioning the security controller from a pre-boot mode to an operating system mode in response to an acknowledgement of the EOP message from the security controller.

Example 25 includes the method of any one of Examples 20 to 24, further including disabling the SRAM before a boot to an operating system.

Example 26 includes means for performing the method of any one of Examples 20 to 25.

Embodiments are applicable for use with all types of semiconductor integrated circuit ("IC") chips. Examples of these IC chips include but are not limited to processors, controllers, chipset components, programmable logic arrays (PLAs), memory chips, network chips, systems on chip (SoCs), SSD/NAND controller ASICs, and the like. In addition, in some of the drawings, signal conductor lines are represented with lines. Some may be different, to indicate more constituent signal paths, have a number label, to indicate a number of constituent signal paths, and/or have arrows at one or more ends, to indicate primary information flow direction. This, however, should not be construed in a limiting manner. Rather, such added detail may be used in connection with one or more exemplary embodiments to facilitate easier understanding of a circuit. Any represented signal lines, whether or not having additional information, may actually comprise one or more signals that may travel in multiple directions and may be implemented with any suitable type of signal scheme, e.g., digital or analog lines implemented with differential pairs, optical fiber lines, and/or single-ended lines.

Example sizes/models/values/ranges may have been given, although embodiments are not limited to the same. As manufacturing techniques (e.g., photolithography) mature over time, it is expected that devices of smaller size could be manufactured. In addition, well known power/ground connections to IC chips and other components may or may not be shown within the figures, for simplicity of illustration and discussion, and so as not to obscure certain aspects of the embodiments. Further, arrangements may be shown in block diagram form in order to avoid obscuring embodiments, and also in view of the fact that specifics with respect to implementation of such block diagram arrangements are highly dependent upon the computing system within which the embodiment is to be implemented, i.e., such specifics should be well within purview of one skilled in the art. Where specific details (e.g., circuits) are set forth in order to describe example embodiments, it should be apparent to one skilled in the art that embodiments can be practiced without, or with variation of, these specific details. The description is thus to be regarded as illustrative instead of limiting.

The term "coupled" may be used herein to refer to any type of relationship, direct or indirect, between the components in question, and may apply to electrical, mechanical, fluid, optical, electromagnetic, electromechanical or other connections. In addition, the terms "first", "second", etc. may be used herein only to facilitate discussion, and carry no particular temporal or chronological significance unless otherwise indicated.

As used in this application and in the claims, a list of items joined by the term "one or more of' may mean any combination of the listed terms. For example, the phrases "one or more of A, B or C" may mean A; B; C; A and B; A and C; B and C; or A, B and C.

Those skilled in the art will appreciate from the foregoing description that the broad techniques of the embodiments can be implemented in a variety of forms. Therefore, while the embodiments have been described in connection with particular examples thereof, the true scope of the embodiments should not be so limited since other modifications will become apparent to the skilled practitioner upon a study of the drawings, specification, and following claims.

## Claims

1. A semiconductor apparatus comprising:
one or more substrates; and
logic coupled to the one or more substrates, wherein the logic is implemented at least partly in one or more of configurable logic or fixed-functionality hardware logic, the logic coupled to the one or more substrates to:
initialize static random access memory (SRAM) of a processor in response to a reset of the processor;
allocate the SRAM to one or more security enforcement operations; and
trigger a multi-threaded execution of the one or more security enforcement operations before completion of a basic input output system (BIOS) phase, wherein the multi-threaded execution is triggered independently of a dynamic RAM (DRAM) initialization.

2. The apparatus of claim 1, wherein the SRAM is to be located in a last level cache of the processor.

3. The apparatus of one of the previous claims, wherein the logic coupled to the one or more substrates is to read size information from a register, and wherein the SRAM is initialized based on the size information.

4. The apparatus of one of the previous claims, wherein the logic coupled to the one or more substrates is to:
send a notification to a security controller when initialization of the SRAM is complete;
identify BIOS action information in an acknowledgment of the notification from the security controller; and
conduct one or more operations in accordance with the BIOS action information.

5. The apparatus of one of the previous claims, wherein the logic coupled to the one or more substrates is to:
send an end of post (EOP) message to a security controller; and
transition the security controller from a pre-boot mode to an operating system mode in response to an acknowledgement of the EOP message from the security controller.

6. The apparatus of any one of claims 1 to 5, wherein the logic coupled to the one or more substrates is to disable the SRAM before a boot to an operating system.

7. The apparatus of any one of claims 1 to 6, wherein the logic coupled to the one or more substrates includes transistor channel regions that are positioned within the one or more substrates.

8. At least one computer readable storage medium comprising a set of executable silicon initialization instructions, which when executed by a computing system, cause the computing system to:
initialize static random access memory (SRAM) of a processor in response to a reset of the processor;
allocate the SRAM to one or more security enforcement operations; and
trigger a multi-threaded execution of the one or more security enforcement operations before completion of a basic input output system (BIOS) phase, wherein the multi-threaded execution is triggered independently of a dynamic RAM (DRAM) initialization.

9. The at least one computer readable storage medium of claim 8, wherein the SRAM is to be located in a last level cache of the processor.

10. The at least one computer readable storage medium of one of the claims 8-9, wherein the silicon initialization instructions, when executed, further cause the computing system to read size information from a register, and wherein the SRAM is initialized based on the size information.

11. The at least one computer readable storage medium of one of the claims 8-10, wherein the silicon initialization instructions, when executed, further cause the computing system to:
send a notification to a security controller when initialization of the SRAM is complete;
identify BIOS action information in an acknowledgment of the notification from the security controller; and
conduct one or more operations in accordance with the BIOS action information.

12. The at least one computer readable storage medium of one of the claims 8-11, wherein the silicon initialization instructions, when executed, further cause the computing system to:
send an end of post (EOP) message to a security controller; and
transition the security controller from a pre-boot mode to an operating system mode in response to an acknowledgement of the EOP message from the security controller.

13. The at least one computer readable storage medium of any one of claims 8 to 12, wherein the silicon initialization instructions, when executed, further cause the computing system to disable the SRAM before a boot to an operating system.

14. A method comprising:
initializing static random access memory (SRAM) of a processor in response to a reset of the processor;
allocating the SRAM to one or more security enforcement operations; and
triggering a multi-threaded execution of the one or more security enforcement operations before completion of a basic input output system (BIOS) phase, wherein the multi-threaded execution is triggered independently of a dynamic RAM (DRAM) initialization.

15. The method of claim 14, wherein the SRAM is located in a last level cache of the processor.
